# EUROPEAN PATENT SPECIFICATION

(11) **EP 3 260 519 B1**
(45) Date of publication and mention of the grant of the patent: **19.02.2025**
(21) Application number: 16020247.9
(22) Date of filing: 23.06.2016
(51) Int. Cl.: C10G 1/10, C10B 47/18, C10B 53/07, F23G 5/027, F23G 7/12, F23J 1/02, C10B 57/02, B65G 33/14, B65G 33/26

(54) **REMOVAL OF CHAR IN A PROCESS FOR CONVERSION OF WASTE HYDROCARBON MATERIAL INTO FUEL**
ENTFERNUNG VON KOHLE IN EINEM VERFAHREN ZUR UMWANDLUNG VON ALTKOHLENWASSERSTOFFMATERIAL IN BRENNSTOFF
ÉLIMINATION DE CHARBON DANS UN PROCESSUS DE CONVERSION DE DÉCHETS EN COMBUSTIBLE DE MATÉRIAU HYDROCARBONÉ

(43) Date of publication of application: 27.12.2017
(73) Proprietor: Plastic Energy Limited, London EC4V 5DY (GB)
(72) Inventor: POSMYK, Andrzej, Kingdown Bristol BS8 2LX (GB); GRAY, James, Redland Bristol BS6 7BT (GB); HALL, Jonathan, Bristol BS6 7SA (GB)
(74) Representative: Boult Wade Tennant LLP

(56) References cited:
- CA-A1- 2 303 795
- CN-U- 203 833 139
- CN-U- 205 257 285
- CZ-A3- 2 014 531
- US-A- 4 256 453
- US-A- 4 761 897
- US-A- 5 798 038
- US-A1- 2006 280 669
- US-A1- 2012 043 194
- US-A1- 2015 080 624
- US-A1- 2015 139 889
- ANONYMOUS: "HYQUIP > Bulk Handling Equipments > Screw Coolers/Dryers", 2 November 2015 (2015-11-02), XP055516535, Retrieved from the Internet <URL:https://web.archive.org/web/20151102043950/https://www.hyquip.com/screw-coolers.html> [retrieved on 20181017]

## Description

### FIELD OF THE INVENTION

The invention relates to removal of char particles in a process for conversion of waste hydrocarbon material such as plastics into fuel.

### STATE OF THE ART

Pyrolysis is a type of thermolysis, and is most commonly applied to organic materials exposed to high temperatures. It also occurs in fires where solid fuels are burning or when vegetation comes into contact with lava in volcanic eruptions. In general, pyrolysis of organic substances produces gas and liquid products and leaves a solid residue richer in carbon content, char. High-density polyethylene HOPE plastic wastes, polypropylene PP, or low-density polyethylene LDPE are pyrolyzed at temperature of less than 700°C and char, or solid residues, derived therefrom may be used for several purposes, including producing briquettes, it may be used as a fuel for the combustion process, or boiling water, etc.

Patent document EP2516592 discloses a pyrolysis chamber which is agitated by rotation of at least two helical blades arranged to rotate close to an internal surface of the pyrolysis chamber; the pyrolysis chamber is further agitated by a central auger, wherein the auger is located so that reverse operation of it causes output of char via a char outlet. This document does not describe a solution for removing the char from the pyrolysis system in a secure manner; yet, for doing so, the operator would need to wait for a predetermined period of time, approximately 70 hours, to open a chamber where the char may be stored. Otherwise, the char may spontaneously ignite in the presence of high temperature, such as 400-450 °C after having passed the pyrolysis process, and the oxygen entering said chamber. This time consuming method is not efficient in industrial premises leading due to the need of stopping a plant for waiting to the char to be removed.

Patent document EP29971 10 discloses a method for processing of plastic waste comprising a last step of directing the dust and gases to a gas cooling apparatus comprising at least two synchronized screw conveyors, wherein the gases are cooled and wherein the dust and the condensate are directed to a filter filled with the char; and wherein the mixture of char is fed back to a microwave pyrolysis reactor. This document discloses a screw conveyor for transporting the char horizontally. These kind of systems of the state of the art are not adapted to safely remove the char at the end of the processing of plastic.

US2006/280669 A1 discloses a process for converting waste materials into a carbon-rich char material and includes the use of a cooling screw conveyor.

The present invention allows to securely remove the char at the end of a method for processing of plastic waste, namely from a pyrolysis process, and also to do it in a reduced period of time compared to the solutions of the state of the art.

### STATEMENT OF THE INVENTION

The present invention is a process according to claim 1. Dependent claims define particular embodiments of the invention. All the features described in this specification including the claims, description and drawings and/or all the steps of the described method can be combined in any combination, with the exception of combinations of such mutually exclusive features and/or steps.

In the context of the present invention, physically isolated means that the cooling chamber and the char contacting surface are airtight or liquid tight isolated. This means that no cooling fluid or cooling medium or air or liquid in the cooling chamber can get into contact with the char being removed or conveyed.

An advantage of the present invention with regard to the state of the art is that the cooling chamber allows for a heat exchange between a cooling fluid and the char on the char contact surface of the screw conveyor in operation. The cooling fluid may be water at a lower temperature than the pyrolysis temperature, for example lower than 400°C. Said heat exchange reduces the time needed to wait until the temperature of the char allows opening the system with no risk of spontaneous ignition. This allows to continuously discharge char whilst also cooling to safe temperature in a short time, namely 2 hours, therefore removing batch bottlenecks and maximising plant throughput.

Besides, the fact that the cooling chamber and the char contact surface are physically isolated avoids the contact between any cooling fluid, such as water, or liquid nitrogen, or cold air, with the char; this avoids the contamination of the dried char so that it can be recovered in its initial status for any purpose.

Other advantages in line with the mentioned are that the present invention allows to securely remove the char at the end of a method for processing of plastic waste, whilst cooling to a safe temperature of below 50°C.

In an embodiment the screw conveyor comprises the cooling chamber in an inner cavity.

In an embodiment the screw conveyor unit comprises a screw chamber, the screw chamber comprising the screw conveyor, and the cooling chamber is concentrically arranged with respect to the screw chamber.

Advantageously this embodiment allows a uniform distribution of the cooling fluid along the cooling chamber in such a way that the heat exchange is uniformly performed and thus in an efficient manner.

In an embodiment the screw conveyor and the cooling chamber are arranged such that, in operation, both the char contacting surface and the cooling fluid perform the heat exchange along the complete length of the screw conveyor.

For example, this embodiment may be implemented by a screw conveyor of a certain length and an elongated cooling chamber of the same or larger length, so that the entire char contact surface of the screw conveyor is cooled down and therefor the char deposited on it in operation.

Advantageously this embodiment decreases the heat exchange time between the char and the cooling fluid in operation, compared to the situation where only one part of the char contacting surface performs the heat exchange with the cooling fluid.

In an embodiment the screw conveyor is void and an inner area of the void screw conveyor comprises the cooling chamber.

This alternative allows reducing the space needed to implement the screw conveyor unit in a pyrolysis system, since the cooling chamber is integrated in the screw conveyor used for transporting the char.

In an embodiment where the screw conveyor unit comprises a screw chamber, the cooling chamber is external and concentric to the screw chamber.

This alternative allows adapting any existing screw unit by simply adding an external and concentric chamber, which may be in cylindrical shape or any other shape, adapted to contain a cooling fluid and adapted to physically isolate the cooling fluid from the char in operation.

The screw conveyor may include cooling fluid tubes inside an auger. The screw conveyor may be present to drive the char forward however cooling fluids can be located inside the auger as well as on the outside jacket.

In an embodiment the screw conveyor unit comprises an inlet for the reception of a cooling fluid.

Advantageously the cooling fluid may be inserted in the cooling chamber via the inlet in such a way that the cooling fluid can be renewed.

In an embodiment the screw conveyor unit comprises an outlet for dropping out a cooling fluid.

Advantageously the cooling fluid may be dropped out from the cooling chamber via the outlet in such a way that the cooling fluid can be renewed.

In an embodiment the screw conveyor unit comprises an inlet for the reception of a cooling fluid and an outlet for dropping out a cooling fluid. The inlet and outlet may be in the form of water tubes inside an auger.

Advantageously the cooling fluid may be flowing continuously or in batches via the inlet and outlet in such a way that a low temperature is maintained. Low temperature means a temperature allowing the heat exchange between the cooling fluid and the char contacting surface to be performed so that the char is cooled down.

In an embodiment the system for treatment of waste plastics further comprises a valve for the delivery of char from a pyrolysis reactor or pyrolysis chamber, or autoclave, to the screw conveyor unit, wherein the valve:
- comprises airtight means and/or gas tight means and/or metal tight means and/or melt plastic-tight means and/or liquid-tight means for isolating the pyrolysis reactor from the screw conveyor unit;
- is made from a fire safe material;
- comprises a piece cast or forged body.

In an embodiment the valve is made of fire safe material rated to 500°C. The valve may also be built in materials not building up contaminant of char and metals on sealing face leading to leak path, such as ceramics, and maybe polymer based coatings.

Advantageously such a valve allows minimising leak paths from the pyrolysis reactor, or pyrolysis chamber, or autoclave, towards the screw conveyor unit.

In an embodiment the valve is a triple offset butterfly valve that allows for scraping of sealing face with self-cleaning nature and removal of body away from contaminant flow path.

In an embodiment the valve is a segmented ball valve comprising metal seat that allows gas seal but also cuts contamination build up and does not allow build up due to lack of packing to seal.

Advantageously the heat exchange between the cooling fluid and the char contacting surface of the screw conveyor unit directly allows to perform a heat exchange between the char contacting surface and the char therefore lowering the temperature of the char.

In an embodiment of the method the cooling fluid is provided simultaneously to receiving the char into the screw conveyor unit.

In an embodiment of the method conveying the char by the screw conveyor is simultaneously performed to descending the temperature of the char by heat exchange.

Advantageously this embodiment allows cooling down the char while the cooling fluid is renewed in the screw conveyor unit so that the cooling temperature is maintained constant and the heat from the char coming from a pyrolysis chamber does not heat the cooling fluid; therefore the heat exchange increases in efficiency and the time to cool down the char is reduced significantly.

Waste plastics provided in the pyrolysis reactor are advantageously first melted through a step of melting the waste plastics materials that can take place in an extruder for example.

The step of providing waste plastics into the pyrolysis reactor is performed preferably at a 400°C temperature of the pyrolysis reactor. This feeding step lasts as long as the pyrolysis reactor is not sufficienltly fed with waste plastics.

The amount of waste plastics fed into the pyrolysis reactor depends on the side of the pyrolysis reactor. For example, a 2-3m³ pyrolysis reactor can be fed until approximately 5 tonnes in order to provide an efficient conversion of waste plastics to fuel. The amount of waste plastics provided into the pyrolysis reactor per hour may be of 350 kgs an hour. It can, in this example, last for about 12 to 16 hours.

After, the predetermined amount of waste plastics to be fed in the pyrolysis reactor is reached, the step of providing waste plastics into the pyrolysis reactor is stopped. Then, the pyrolysis step of heating, at a first temperature, waste plastics in the pyrolysis reactor to provide pyrolysis gases and char is performed. Preferably, the first temperature is comprised between 350°C and 450°C. An agitator agitate the inside of the pyrolysis reactor. Inside of the pyrolysis reactor, during the pyrolysis step, waste plastics are pyrolysed in an oxygen-free atmosphere while being agitated. Agitation is performed by a double helical agitator. The agitation aims at improving the heat transfer inside of the pyrolysis reactor in order to improve the pyrolysis step.

During this pyrolysis stage, all the pyrolysis gases are extracted from the pyrolysis reactor which is left with wet and sticky char. Char is to be evacuated from the pyrolysis reactor through a screw conveyor unit. Char may be paste-like in consistency and thus difficult to be removed through the screw conveyor unit.

The cook-off step helps to reduce the wetness of the char and turn it into a dry powder easier to remove from the pyrolysis reactor. The cook off step is performed once the viscosity of the char has reached a predetermined threshold. The cook-off step can last for about three to four hours. The second temperature is preferably 20% higher than the first temperature. It can be comprised between 420°C and 500°C, preferably around 450°C.

The measure of the viscosity, or dryness, of the char is obtained through measuring the load of the means for agitating the inside of the pyrolysis reactor. A good indicator of the load of the agitator is the current of the agitator. For a 2-3m3 pyrolysis reactor, the normal operation current of the agitator is around 20-30 A and the predetermined threshold is around 45-55A. Once again, it depends on the size of the pyrolysis reactor.

Advantageously, the pyrolysis gases are evacuated to a contactor or a reflux column. The third temperature of the contactor or of the reflux column is measured, preferably at the outlet of the contactor or of the reflux column. When it reaches a predetermined value, the cook-off step is stopped and the char is provided to the screw conveyor unit for its removal from the pyrolysis reactor. A drop of the third temperature of the outlet of the contactor is an indicator that you have driven hydrocarbon liquid off the char because there is no more flowing upwards past the temperature probe.

### DESCRIPTON OF THE FIGURES

These and other characteristics and advantages of the invention will become clearly understood in view of the detailed description of the invention which becomes apparent from a preferred embodiment of the invention, given just as an example and not being limited thereto, with reference to the drawings.
Fig 1. This figure shows an elevated view of a screw conveyor unit 10 used in a process according to the invention which is void and an inner area of the void screw conveyor 11 comprises a cooling chamber 12 in an inner cavity.
Fig 2. This figure shows an elevated view of a screw conveyor unit (20) used in a process according to the invention comprising a cooling chamber (23) which in turn comprises a screw chamber (24) in an inner cavity. The inner screw conveyor is not represented.
Fig 3. This figure shows an example of a system used in a process according to the invention.

### DETAILED DESCRIPTON OF THE INVENTION

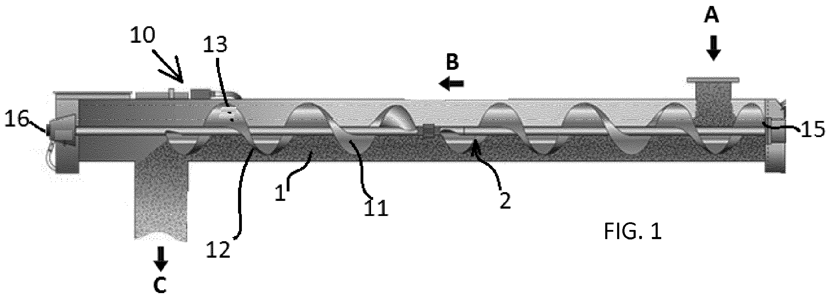

Figure 1 shows an example of a screw conveyor unit (10) for removing char (1) from a system for processing plastic waste used in the method according to the invention, the screw conveyor unit (10) comprising
- a screw conveyor (11), comprising a char contacting surface (12), in this figure being the surface of the screw conveyor (11) and
- a cooling chamber (13) in an inner cavity of the screw conveyor (12). The cooling chamber (13) is adapted to contain a cooling fluid (2), for example water.

The screw conveyor (11) and the cooling chamber (13) are arranged such that
- the cooling chamber (13) is physically isolated from the char contacting surface (12) of the screw conveyor, in such a way that the cooling fluid (2) is not allowed to get into contact with the char (1) being conveyed by the screw conveyor (11) and
- the screw conveyor (11) and the cooling chamber (13) allow, in operation, a heat exchange between the cooling fluid and the char when the cooling chamber (13) contains a cooling fluid (2).

For a heat exchange to be allowed between the cooling fluid (2) and the char (1) when the cooling chamber (13) contains a cooling fluid (2), materials such as steel are preferably used for the screw conveyor (11) and/or for the char contacting surface (12) and/or for the cooling chamber (13). Steel or mild steel properties are appropriate for high and low temperatures such as temperatures in the range of [from ambient - 300°C] or [from ambient - 700] or [from ambient -800°C] or [50-500°C], where ambient may be 20°C, or 21°C, or 22°C, or 23°C, or 24°C or 26°C or 27°C. Stainless steel may reach a maximum temperature around 700°C, and mild steel may reach a maximum temperature around 300°C.

Figure 1 also shows points A, B, C and arrows indicating:
- A: Indicates the position where char is charged in the screw conveyor unit (10). This point may come from a pyrolysis chamber for treating plastic waste;
- B: Indicates a middle point in the screw conveyor unit and the arrow indicates the conveying direction of the char (1);
- C: Indicates the point where char is extracted from the screw conveyor unit (10); it may be directed towards a chamber where it remains until it is finally recovered for any purpose.

In figure 1 the cooling fluid may be inserted into a side point of the cooling chamber, for example into point 15. The cooling fluid (2) may also be extracted from point 16. The cooling fluid (2) may be continuously inserted and even simultaneously to the load of char into the screw conveyor unit (10). The feeding speed of the cooling fluid may be regulated to allow an improved heat exchange between the char and the cooling fluid, for example in a configuration of
- Screw conveyor (11) of 6 metres long,
- Water speed at 50°C and at 7 m3/hour

it is possible to reduce the temperature of the char from 400°C to 50° in less than 2 hours, whilst continuously discharging at 400 kg/hr.

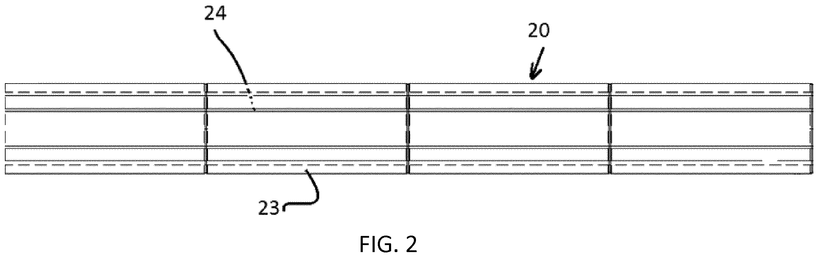

Figure 2 shows an elevated view of a screw conveyor unit (20) comprising a screw conveyor not represented in the interior of a screw chamber (24), and a cooling chamber (23) or cooling jacket concentric and external to the screw chamber (24).

The screw conveyor unit (20) of figure 2 may present the following configuration:
Construction materials: mild steel but others and same material than the screw.
Char bulk density: 460kg/l/m3
Char feed rate of 400kg/l/hr
Water inlet temperature at 5°C
Water outlet temperature at 15°C.

The screw conveyor and the cooling chamber being 6 meters long, allow conveying char at a rate of 400 Kg/hour.

The cooling fluid (2) is water. Preferably the flowrate of water 10 times the char flow. The input of water may be performed via flexible hoses.

This configuration allows cooling down the char from 450-550'c to below 50°C in less than 2 hours.

In an example, the char is fed into the screw conveyor unit via a valve, this valve being, in an example, a butterfly valve triple offset butterfly valve. This type of valve provides
- Isolation between the pyrolysis valve and the screw conveyor unit,
- field replaceable seat and seal
- firesafe features,
- lower cost of ownership than two single isolating valves,
- availability in any material to suit any working condition
- one piece cast or forged body thus minimising potential leak paths

In an embodiment, the triple offset butterfly valve is adapted to provide
- a gas seal against nitrogen at low and high temperatures
- sealing against molten plastic, liquid fuel and char/metals contamination repeatedly after cycling
- not build up of crust at the sealing face due to its offset out of the solid flow path and its scraping and compression seating once actuated.

The advantages of a segmented ball valve are the same, however, a segmented ball valve comprises a metal seal rather than packing that allow for no contamination and build-up from solids as well as better scraping

In an example the valve comprises airtight means and/or gas tight means and/or metal tight means for isolating the pyrolysis chamber from the screw conveyor unit.

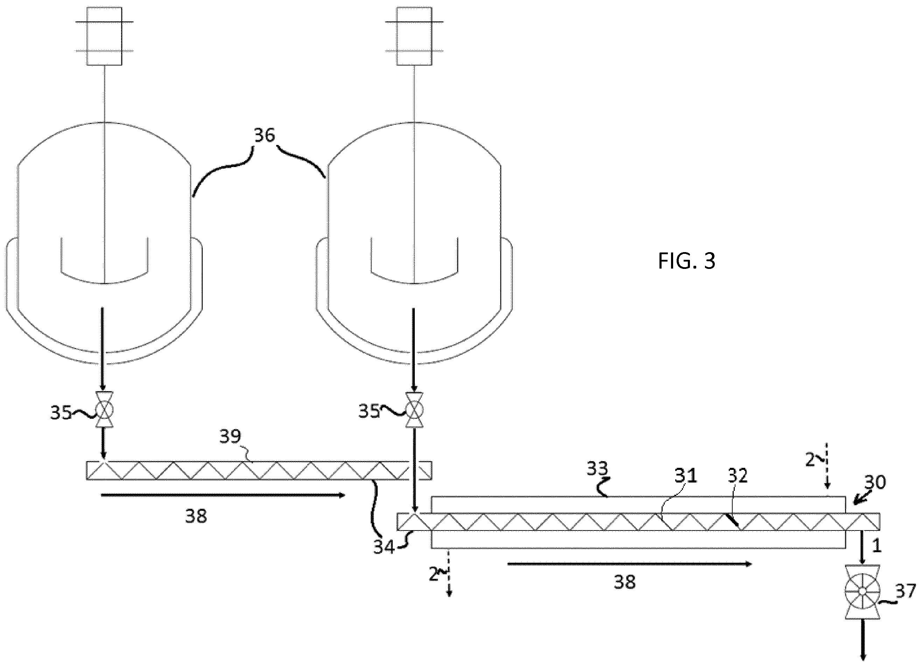

Figure 3 shows an example of a system for treatment of waste plastics in a process according to the invention wherein there are represented:
- first and second pyrolysis reactors (36) or pyrolysis chambers or autoclaves for pyrolysis purposes,
- a valve (35) of the type butterfly or segmented ball valve at the exit of each pyrolysis reactor (36)
- a first screw conveyor (39) according to the state of the art, directing the char exiting from the first pyrolysis reactor in the direction of the arrow (38); this first screw conveyor of the state of the art comprises a screw chamber (34), but said screw chamber (34) does not comprise a cooling chamber;
- a screw conveyor unit (30) used in the method according to the invention comprising a screw chamber (34) and a cooling chamber (33) adapted to receive char (1) from the first screw conveyor (39) according to the state of the art and from the second pyrolysis reactor (36);
- a rotary valve (37) for allowing the char (1) to drop out from the system.

Figure 3 also represents:
A screw conveyor unit (30) for removing char (1) from the system for treatment of waste plastics, the screw conveyor unit (30) comprising
- a second screw conveyor (31), comprising a char contacting surface (32) and
- a cooling chamber (33) adapted to contain a cooling fluid (2),
   arranged such that
- the cooling chamber (33) is physically isolated from the char contacting surface (32) of the second screw conveyor (31) and
- the second screw conveyor (31) and the cooling chamber (33) allow, in operation, a heat exchange between the cooling fluid (2) and the char when the cooling chamber (33) contains a cooling fluid (2).

In the system of figure 3 the first screw conveyor (39) of the state of the art may convey the char (1) at a temperature of 450°C until the char (1) is dropped down towards the screw conveyor unit (30) of the invention. Water (2) at a temperature of 5°C may be inserted into the cooling chamber (33) to heat exchange with the char coming from the first screw conveyor (39) according to the state of the art and from the second pyrolysis reactor (36). The result is that the char is cooled down in less time than in the state of the art and the char can be extracted in less time than in the state of the art, therefore avoiding delays in treatment of waste plastics.

In the system of figure 3 the screw conveyor of the state of the art may convey the char (1) at a temperature of 450°C until the char (1) is dropped down towards the screw conveyor unit (30) of the invention, where water (2) at a temperature of 5°C may be inserted to cool down the char coming from the screw conveyor (39) according to the state of the art and the second pyrolysis reactor (36).

In the pyrolysis reactors (36) or pyrolysis chambers or autoclaves the step of drying/lowering viscosity of the char takes place.

Melted waste plastics are provided to the pyrolysis reactor (36). Pyrolysis at a first temperature happens in the pyrolysis reactors (36). During pyrolysis, melted plastics are agitated inside of the pyrolysis reactor (36) through agitating means.

During this step of pyrolysis, both pyrolysis gases and char are produced. Pyrolysis gases are to be sent to a contactor downstream of the pyrolysis reactors (36) for further cracking of fuel molecules. Char remains on the inner wall of the pyrolysis reactors. It is very important to avoid extraction of char to the contactor. The pollution of end-of-cycle fuel through char particles is to be avoided. Thus, removal of char from the pyrolysis reactors is critical.

However, at the end of the step of heating at the first temperature, char particles accumulate into the pyrolysis reactor and stick to the inner wall of the pyrolysis reactors and are difficult to remove through the screw conveyor unit.

Measurement of the viscosity of the char in the pyrolysis reactor is performed through measurement of the load of agitating means. When the viscosity reaches a predetermined threshold, the pyrolysis step is stopped and the cook-off step begins. The cook-off steps aims at drying the char in order to lower its viscosity and turn it into an easily to be removed char powder.

An advantage of drying the char before removal is that plastics or slurry blockage problems are avoided.

## Claims

1. A method for processing of plastic waste comprising:
- a step of providing waste plastics into a first pyrolysis reactor said first pyrolysis reactor comprising an agitator configured to agitate said waste plastics therein;
- a pyrolysis step of heating, at a first temperature, waste plastics in the pyrolysis reactor to provide pyrolysis gases and char;
- a step of measuring the dryness of the char in the first pyrolysis reactor by measuring the load of said agitator,
- a completion step of completing the pyrolysis step;
- a cook-off step of heating at a second temperature, the inside of the first pyrolysis reactor when the load of said agitator reaches a predetermined threshold, said second temperature being higher than the first temperature.
and, after completing said cook-off step, - a step of removing char from a system for treatment of waste plastics comprising a screw conveyor unit (10, 20, 30) for removing char from said system, said screw conveyor unit comprising:
- a screw conveyor (11,21,31), comprising a char contacting surface (12, 32) and
- a cooling chamber (13, 23, 33) adapted to contain a cooling fluid (2),
arranged such that
- the cooling chamber (13, 23, 33) is physically isolated from the char contacting surface (12, 32) of the screw conveyor (11, 21, 31) and
- the screw conveyor (11, 21, 31) and the cooling chamber (13, 23, 33) are configured to allow, in operation, a heat exchange between the cooling fluid (2) and the char (1) when the cooling chamber (13, 23, 33) contains a cooling fluid (2),
said step of removing char comprising:
- providing a cooling fluid to the screw conveyor unit;
- receiving the char into the screw conveyor unit;
- conveying the char by the screw conveyor wherein the char is in contact with a char contacting surface of the screw conveyor;
- lowering the temperature of the char by heat exchange between the cooling fluid and the char contacting surface of the screw conveyor unit.

2. Method according to claim 1 wherein the screw conveyor (11, 21, 31) and the cooling chamber (13, 23, 33) are arranged such that, in operation, both the char contacting surface and the cooling fluid are able to perform the heat exchange along the whole length of the screw conveyor.

3. Method according to claim 1 or 2 wherein the screw conveyor unit (10, 20, 30) comprises a screw chamber (24, 34), the screw chamber comprising the screw conveyor, and the cooling chamber is concentrically arranged with respect to the screw chamber.

4. Method according to claim 3 wherein the cooling chamber is external and concentric to the screw chamber.

5. Method according to any one of claims 1 to 4 wherein the screw conveyor is void and an inner area of the void screw conveyor comprises the cooling chamber;

6. Method according to any one of claims 1 to 5 wherein the screw conveyor unit (10, 20, 30) comprises an inlet for the reception of the cooling fluid and/or an outlet for dropping out said cooling fluid.

7. Method according to any one of claims 1 to 6 wherein the cooling fluid (2) is provided simultaneously to receiving the char (1) into the screw conveyor unit (10, 20, 30).

8. Method according to any one of claims 1 to 7 wherein conveying the char (1) by the screw conveyor (10, 20, 30) is performed simultaneously to descending the temperature of the char by heat exchange.

9. Method according to any of claims 1 to 8, wherein the screw conveyor (11, 21, 31) is denoted as a second screw conveyor (11, 21, 31), the system further comprising:
- a second pyrolysis reactor (36);
- a valve (35) of the type butterfly or segmented ball valve at the exit of each pyrolysis reactor (36);
- a first screw conveyor (39) for directing the char exiting from the second pyrolysis reactor; this first screw conveyor comprising a screw chamber (34), said screw chamber (34) not comprising a cooling chamber;
- the screw conveyor unit (30) further comprising a screw chamber (34), the screw chamber and the cooling chamber (33) being adapted to receive char (1) from the first screw conveyor (39) and from the first pyrolysis reactor (36);
- a rotary valve (37) for allowing the char (1) to drop out from the system.

10. Method according to claim 9, wherein each said valve (35) of the type butterfly or segmented ball valve is adapted for delivering char from the pyrolysis reactors (36) to the first screw conveyor (39) and to the screw conveyor unit (10, 20, 30), respectively, wherein each said valve (35) of the type butterfly or segmented ball valve:
- comprises airtight means and/or gas tight means for isolating the pyrolysis reactor from the screw conveyor unit; and/or
- comprises a piece cast or forged body.

11. Method according to claim 1 wherein waste plastics provided in the pyrolysis reactor are first melted through a step of melting the waste plastics materials.

12. Method according to any preceding claim wherein it comprises:
- a step of evacuating the pyrolysis gases from the pyrolysis reactor (36) to a contactor or a reflux column and ;
- a step of measuring a third temperature of the contactor or the reflux column; and
- a step of providing the char (1) into the screw conveyor unit (30) when the third temperature reaches a predetermined value.

## Patentansprüche

1. Verfahren zum Verarbeiten von Kunststoffabfall, umfassend:
- einen Schritt des Bereitstellens von Kunststoffabfällen in einen ersten Pyrolysereaktor, wobei der erste Pyrolysereaktor ein Rührwerk umfasst, welches dazu eingerichtet ist, die Kunststoffabfälle darin zu rühren;
- einen Pyrolyseschritt des Erhitzens, bei einer ersten Temperatur, der Kunststoffabfälle in dem Pyrolysereaktor, um Pyrolysegase und Verkohlungsrückstand bereitzustellen;
- einen Schritt des Messens der Trockenheit des Verkohlungsrückstands in dem ersten Pyrolysereaktor durch Messen der Belastung des Rührwerks,
- einen Abschlussschritt des Abschließens des Pyrolyseschritts;
- einen Abkochschritt des Erhitzens, bei einer zweiten Temperatur, des Inneren des ersten Pyrolysereaktors, wenn die Belastung des Rührwerks einen vorbestimmten Schwellenwert erreicht, wobei die zweite Temperatur höher ist als die erste Temperatur,
und nach Abschließen des Abkochschritts, - einen Schritt des Entfernens von Verkohlungsrückstand aus einem System zur Behandlung von Kunststoffabfällen, umfassend eine Schneckenfördereinheit (10, 20, 30) zum Entfernen von Verkohlungsrückstand aus dem System, wobei die Schneckenfördereinheit umfasst:
- einen Schneckenförderer (11, 21, 31), umfassend eine Verkohlungsrückstand-Kontaktfläche (12, 32) und
- eine Kühlkammer (13, 23, 33), welche dazu angepasst ist, ein Kühlfluid (2) zu enthalten, und welche so angeordnet ist, dass
- die Kühlkammer (13, 23, 33) physikalisch von der Verkohlungsrückstand-Kontaktfläche (12, 32) des Schneckenförderers (11, 21, 31) isoliert ist und
- der Schneckenförderer (11, 21, 31) und die Kühlkammer (13, 23, 33) dazu eingerichtet sind, dass sie im Betrieb einen Wärmeaustausch zwischen dem Kühlfluid (2) und dem Verkohlungsrückstand (1) ermöglichen, wenn die Kühlkammer (13, 23, 33) ein Kühlfluid (2) enthält,
wobei der Schritt des Entfernens der Verkohlungsrückstands umfasst:
- Bereitstellen eines Kühlfluids an die Schneckenfördereinheit;
- Aufnehmen des Verkohlungsrückstands in die Schneckenfördereinheit;
- Fördern des Verkohlungsrückstands durch den Schneckenförderer, wobei der Verkohlungsrückstand in Kontakt mit einer Verkohlungsrückstand-Kontaktfläche des Schneckenförderers steht;
- Senken der Temperatur des Verkohlungsrückstands durch Wärmeaustausch zwischen dem Kühlfluid und der Verkohlungsrückstand-Kontaktfläche der Schneckenfördereinheit.

2. Verfahren nach Anspruch 1, wobei der Schneckenförderer (11, 21, 31) und die Kühlkammer (13, 23, 33) so angeordnet sind, dass im Betrieb sowohl die Verkohlungsrückstand-Kontaktfläche als auch das Kühlfluid in der Lage sind, den Wärmeaustausch über die gesamte Länge des Schneckenförderers durchzuführen.

3. Verfahren nach Anspruch 1 oder 2, wobei die Schneckenfördereinheit (10, 20, 30) eine Schneckenkammer (24, 34) umfasst, wobei die Schneckenkammer den Schneckenförderer umfasst, und die Kühlkammer konzentrisch in Bezug zur Schneckenkammer angeordnet ist.

4. Verfahren nach Anspruch 3, wobei die Kühlkammer extern und konzentrisch zur Schneckenkammer angeordnet ist.

5. Verfahren nach einem der Ansprüche 1 bis 4, wobei der Schneckenförderer leer ist und ein Innenbereich des leeren Schneckenförderers die Kühlkammer umfasst.

6. Verfahren nach einem der Ansprüche 1 bis 5, wobei die Schneckenfördereinheit (10, 20, 30) einen Einlass für die Aufnahme des Kühlfluids und/oder einen Auslass zum Ausscheiden des Kühlfluids umfasst.

7. Verfahren nach einem der Ansprüche 1 bis 6, wobei das Kühlfluid (2) gleichzeitig mit dem Aufnehmen des Verkohlungsrückstands (1) in die Schneckenfördereinheit (10, 20, 30) bereitgestellt wird.

8. Verfahren nach einem der Ansprüche 1 bis 7, wobei das Fördern des Verkohlungsrückstands (1) durch den Schneckenförderer (10, 20, 30) gleichzeitig mit einem Herabsetzen der Temperatur der Verkohlungsrückstand durch Wärmeaustausch durchgeführt wird.

9. Verfahren nach einem der Ansprüche 1 bis 8, wobei der Schneckenförderer (11, 21, 31) als ein zweiter Schneckenförderer (11, 21, 32) gekennzeichnet ist, wobei das System ferner umfasst:
- einen zweiten Pyrolysereaktor (36);
- ein Ventil (35) vom Typ Drosselklappe oder Kugelsegmentventil am Ausgang von jedem Pyrolysereaktor (36);
- einen ersten Schneckenförderer (39) zum Leiten des Verkohlungsrückstands, welche aus dem zweiten Pyrolysereaktor austritt; wobei dieser erste Schneckenförderer eine Schneckenkammer (34) umfasst, wobei die Schneckenkammer (34) keine Kühlkammer umfasst;
- die Schneckenfördereinheit (30), ferner umfassend eine Schneckenkammer (34), wobei die Schneckenkammer und die Kühlkammer (33) dazu angepasst sind, dass sie Verkohlungsrückstand (1) von dem ersten Schneckenförderer (39) und von dem ersten Pyrolysereaktor (36) aufnehmen;
- ein Drehventil (37), um es dem Verkohlungsrückstand (1) zu ermöglichen, aus dem System auszuscheiden.

10. Verfahren nach Anspruch 9, wobei jedes Ventil (35) vom Typ Drosselklappe oder Kugelsegmentventil dazu angepasst ist, Verkohlungsrückstand aus den Pyrolysereaktoren (36) jeweils an den ersten Schneckenförderer (39) und an die Schneckenfördereinheit (10, 20, 30) zu liefern, wobei jedes Ventil (35) vom Typ Drosselklappe oder Kugelsegmentventil:
- luftdichte Mittel und/oder gasdichte Mittel zum Isolieren des Pyrolysereaktors von der Schneckenfördereinheit umfasst; und/oder
- ein gegossenes Stück oder geschmiedeten Körper umfasst.

11. Verfahren nach Anspruch 1, wobei Kunststoffabfälle, welche im Pyrolysereaktor bereitgestellt werden, zunächst durch einen Schritt des Schmelzens der Kunststoffabfallmaterialien geschmolzen werden.

12. Verfahren nach einem der vorhergehenden Ansprüche, wobei es umfasst:
- einen Schritt des Evakuierens der Pyrolysegase aus dem Pyrolysereaktor (36) zu einem Kontaktor oder einer Rückflusssäule und;
- einen Schritt des Messens einer dritten Temperatur des Kontaktors oder der Rückflusssäule; und
- einen Schritt des Bereitstellens des Verkohlungsrückstands (1) in die Schneckenfördereinheit (30), wenn die dritte Temperatur einen vorbestimmten Wert erreicht.

## Revendications

1. Procédé de traitement de déchets plastiques comprenant :
- une étape de fourniture de déchets plastiques dans un premier réacteur de pyrolyse, ledit premier réacteur de pyrolyse comprenant un agitateur configuré pour agiter lesdits déchets plastiques à l'intérieur de celui-ci ;
- une étape de pyrolyse consistant à chauffer, à une première température, des déchets plastiques dans le réacteur de pyrolyse pour fournir des gaz de pyrolyse et du charbon ;
- une étape de mesure de la siccité du charbon dans le premier réacteur de pyrolyse en mesurant la charge dudit agitateur,
- une étape d'achèvement consistant à achever l'étape de pyrolyse ;
- une étape de cuisson consistant à chauffer à une deuxième température l'intérieur du premier réacteur de pyrolyse lorsque la charge dudit agitateur atteint un seuil prédéterminé, ladite deuxième température étant supérieure à la première température ;
et, après avoir achevé ladite étape de cuisson, - une étape d'élimination de charbon d'un système de traitement de déchets plastiques comprenant une unité de convoyeur à vis (10, 20, 30) pour éliminer le charbon dudit système, ladite unité de convoyeur à vis comprenant :
- un convoyeur à vis (11, 21, 31), comprenant une surface de contact de charbon (12, 32) et
- une chambre de refroidissement (13, 23, 33) adaptée pour contenir un fluide de refroidissement (2), disposée de telle sorte que
- la chambre de refroidissement (13, 23, 33) est physiquement isolée vis-à-vis de la surface de contact de charbon (12, 32) du convoyeur à vis (11, 21, 31) et
- le convoyeur à vis (11, 21, 31) et la chambre de refroidissement (13, 23, 33) sont configurés pour permettre, en fonctionnement, un échange de chaleur entre le fluide de refroidissement (2) et le charbon (1) lorsque la chambre de refroidissement (13, 23, 33) contient un fluide de refroidissement (2),
ladite étape d'élimination de charbon comprenant :
- la fourniture d'un fluide de refroidissement à l'unité de convoyeur à vis ;
- la réception du charbon dans l'unité de convoyeur à vis ;
- le transport du charbon par le convoyeur à vis, dans lequel le charbon est en contact avec une surface de contact de charbon du convoyeur à vis ;
- l'abaissement de la température du charbon par échange de chaleur entre le fluide de refroidissement et la surface de contact de charbon de l'unité de convoyeur à vis.

2. Procédé selon la revendication 1, dans lequel le convoyeur à vis (11, 21, 31) et la chambre de refroidissement (13, 23, 33) sont disposés de telle sorte que, en fonctionnement, la surface de contact de charbon et le fluide de refroidissement sont tous deux capables d'effectuer l'échange de chaleur sur toute la longueur du convoyeur à vis.

3. Procédé selon la revendication 1 ou 2, dans lequel l'unité de convoyeur à vis (10, 20, 30) comprend une chambre à vis (24, 34), la chambre à vis comprenant le convoyeur à vis, et la chambre de refroidissement est disposée concentriquement par rapport à la chambre à vis.

4. Procédé selon la revendication 3, dans lequel la chambre de refroidissement est externe et concentrique par rapport à la chambre à vis.

5. Procédé selon l'une quelconque des revendications 1 à 4, dans lequel le convoyeur à vis est vide et une zone intérieure du convoyeur à vis vide comprend la chambre de refroidissement.

6. Procédé selon l'une quelconque des revendications 1 à 5, dans lequel l'unité de convoyeur à vis (10, 20, 30) comprend une entrée pour la réception du fluide de refroidissement et/ou une sortie pour libérer ledit fluide de refroidissement.

7. Procédé selon l'une quelconque des revendications 1 à 6, dans lequel le fluide de refroidissement (2) est fourni simultanément à la réception du charbon (1) dans l'unité de convoyeur à vis (10, 20, 30).

8. Procédé selon l'une quelconque des revendications 1 à 7, dans lequel le transport du charbon (1) par le convoyeur à vis (10, 20, 30) est effectué simultanément à la diminution de la température du charbon par échange de chaleur.

9. Procédé selon l'une quelconque des revendications 1 à 8, dans lequel le convoyeur à vis (11, 21, 31) est désigné comme un second convoyeur à vis (11, 21, 31), le système comprenant en outre :
- un second réacteur de pyrolyse (36) ;
- une vanne (35) du type papillon ou vanne à segment sphérique au niveau de la sortie de chaque réacteur de pyrolyse (36) ;
- un premier convoyeur à vis (39) pour diriger le charbon sortant du second réacteur de pyrolyse ; ce premier convoyeur à vis comprenant une chambre à vis (34), ladite chambre à vis (34) ne comprenant pas de chambre de refroidissement ;
- l'unité de convoyeur à vis (30) comprenant en outre une chambre à vis (34), la chambre à vis et la chambre de refroidissement (33) étant adaptées pour recevoir du charbon (1) provenant du premier convoyeur à vis (39) et du premier réacteur de pyrolyse (36) ;
- une vanne rotative (37) pour permettre la libération du charbon (1) à partir du système.

10. Procédé selon la revendication 9, dans lequel chaque vanne (35) du type papillon ou vanne à segment sphérique est adaptée pour délivrer du charbon à partir des réacteurs de pyrolyse (36) dans le premier convoyeur à vis (39) et dans l'unité de convoyeur à vis (10, 20, 30), respectivement, dans lequel chaque vanne (35) du type papillon ou vanne à segment sphérique :
- comprend des moyens étanches à l'air et/ou des moyens étanches au gaz pour isoler le réacteur de pyrolyse vis-à-vis de l'unité de convoyeur à vis ; et/ou
- comprend un corps moulé ou forgé en une seule pièce.

11. Procédé selon la revendication 1, dans lequel les déchets plastiques fournis dans le réacteur de pyrolyse sont tout d'abord fondus par l'intermédiaire d'une étape de fusion des déchets de matières plastiques.

12. Procédé selon l'une quelconque des revendications précédentes, dans lequel il comprend :
- une étape d'évacuation des gaz de pyrolyse du réacteur de pyrolyse (36) vers un contacteur ou une colonne de reflux et ;
- une étape de mesure d'une troisième température du contacteur ou de la colonne de reflux ; et
- une étape de fourniture du charbon (1) dans l'unité de convoyeur à vis (30) lorsque la troisième température atteint une valeur prédéterminée.
